# FASCICULE DE BREVET EUROPEEN

(11) **EP 0 466 612 B1**
(45) Date de publication et mention de la délivrance du brevet: **09.11.1994**
(21) Numéro de dépôt: 91420186.8
(22) Date de dépôt: 11.06.1991
(51) Int. Cl.: A01N 43/653

(54) **Procédé de traitement fongicide foliaire au moyen d'un triazole et composition fongicide pour mettre en oeuvre le procédé**
Verfahren zur fungiziden Blattbehandlung mit einem Triazol und fungizide Zusammensetzung zur Durchführung dieses Verfahrens
Method for fungicidal foliage treatment with a triazole and fungicidal composition for carrying out the method

(30) Priorité: 13.06.1990 FR 9007606
(43) Date de publication de la demande: 15.01.1992
(73) Titulaire: RHONE-POULENC AGROCHIMIE, 69009 Lyon (FR)
(72) Inventeur: Greiner, Alfred, F-69450 St Cyr au Mont d'Or (FR); Hutt, Jean, F-69009 Lyon (FR); Mugnier, Jacques, F-74330 La Balme de Lillingy (FR); Pepin, Régis, F-69140 Rilleux la Pape (FR)
(74) Mandataire: Chrétien, François

(56) Documents cités:
- EP-A- 0 052 424
- EP-A- 0 096 307
- EP-A- 0 135 854
- EP-A- 0 267 778
- EP-A- 0 378 953

## Description

La présente invention concerne un procédé pour protéger, à titre curatif ou préventif, les végétaux contre les maladies fongiques par application sur les feuilles desdits végétaux d'une dose efficace :
- d'une composition contenant (a) le 2-(4-chlorobenzylidène)-5,5-diméthyl-1-(1H-1,2,4-triazol-1-ylméthyl)-1-cyclopentanol, (b) un ou plusieurs fongicides, un support inerte convenable en agriculture et éventuellement un tensio actif convenable en agriculture ;
- ou de ses composés individuels (a) et (b).

Le 2-(4-chloro-benzylidène)-5,5-diméthyl-1-(1H-1,2,4-triazol-1-ylméthyl)-1-cyclopentanol est décrit dans la demande de brevet européen n° 378953. Ledit composé peut être obtenu de la façon suivante :
Préparation de 2-(4-chlorobenzylidène) 5,5-diméthyl 1-(1H-1,2,4-triazol-1-ylméthyl)-1-cyclopentanol.

A un mélange de 10 g de 2,2-diméthyl cyclopentanone et 13,8 g de 4-chlorobenzaldehyde dans 100 ml d'éthanol à 0°C, est ajouté 100 ml d'une solution aqueuse de soude à 10 %. Après 30 minutes une épaisse bouillie était filtrée et le solide lavé puis séché. On obtient 12,5 g de 2,2-diméthyl 5-(4-chlorobenzylidène) 1-cyclopentanone de point de fusion 120°C. Ce composé dissout dans 50 ml de THF était ajouté à une solution formée de la façon suivante : 1,9 g d'hydrure de sodium (dispersion à 80 % dans l'huile minérale) dans 50 ml de DMSO anhydre est chauffée à 80°C jusqu'à dissolution totale du solide. Puis la solution est diluée avec 100 ml de THF, puis refroidie à -10°C. On ajoute au mélange en dix minutes une solution de 11,5 g de triméthylsulfonium iodure dans 80 ml de diméthylsulfoxide et le mélange était agité pendant 15 minutes à -10°C. Une solution de 11,8 g de 2,2-diméthyl 4-chloro 5-(4-chlorobenzylidène) 1-cyclopentanone était ensuite ajoutée dans 100 ml de THF.

Le mélange ainsi produit est laissé à température ambiante puis versé dans l'eau et extrait à l'éther, lavé à l'eau, séché, distillé. On obtient le 7-(4-chlorobenzylidène) 4,4-diméthyl 1-oxaspiro (2,4) heptane directement utilisé pour l'étape suivante.

Un mélange de 5 g du produit avec 2,8 g de 1,2,4-triazole et 11 g de carbonate de potassium est chauffé dans 40 ml de N,N diméthylformamide durant 4 heures. Le mélange est versé dans l'eau, extrait à l'acétate d'éthyle. La phase organique est lavée, séchée, recristallisée pour obtenir le produit annoncé dont le point de fusion est de 143°C.

La structure du composé est très majoritairement (>95 %) celle où le groupe parachlorophényl est en position E par rapport au carbone portant le groupe hydroxy.

La 2,2-diméthylcyclopentanone peut être obtenue de manière connue dans la littérature ou est disponible sur le marché (voir fine chemical directory).

Pour choisir les fongicides b) convenant pour la protection des végétaux, l'homme de métier pourra utilement se référer aux indications qui sont données dans les ouvrages de référence et qui mentionnent l'absence de phytotoxicité desdits produits autant que leur efficacité contre telle ou telle maladie.

Parmi ces ouvrages, on peut citer l'index phytosanitaire édition 1990 ACTA 75595 PARIS CEDEX 12.

Les compositions fongicides contiennent habituellement 0,5 à 95 % de matière active.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, et....) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est indispensable parce que la matière active et/ou le support inerte ne sont pas solubles dans l'eau et que l'agent vecteur de l'application est l'eau.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions utilisables dans l'invention peuvent être associées à tous les additifs solides ou liquides correspondant aux techniques habituelles de la mise en formulation.

Parmi les compositions, on peut citer de manière générale les compositions solides ou liquides.

Comme formes de compositions solides, on peut citer les poudres pour poudrage ou dispersion (à teneur en composés actifs pouvant aller jusqu'à 100 %) et les granulés, notamment ceux obtenus par extrusion, par compactage, par imprégnation d'un support granulé, par granulation à partir d'une poudre (la teneur en composés actifs dans ces granulés étant entre 1 et 80 % pour ces derniers cas).

Les compositions peuvent encore être utilisées sous forme de poudre pour poudrage ; on peut aussi utiliser une composition comprenant 50 g de matière active, 10 g de silice finement divisée et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A partir de ces concentrés, on peut obtenir par dilution avec de l'eau des émulsions de toute concentration désirée, qui conviennent particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les feuilles des végétaux.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, de composition de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les associations choisies.

Les compositions utilisables dans l'invention peuvent être utilisées pour la lutte tant préventive que curative contre les champignons, notamment de type basidiomycètes, ascomycètes, adelomycètes ou fungi-imperfecti, en particulier les rouilles, oïdium, piétin-verse, fusarioses, fusarium roseum, fusarium nivale, helminthosporioses, rhynchosporioses, septorioses, caries, rhizoctones des végétaux et des plantes en général et en particulier des céréales telles que le blé, l'orge, le seigle, l'avoine et leurs hybrides et aussi le riz et le maïs.

Les compositions utilisables dans l'invention sont actives en particulier contre les champignons notamment de type basidiomycètes, ascomycètes, adelomycètes ou fungi-imperfecti comme Botrytis cinerea, Erysiphe graminis, Puccinia recondita, Piricularia oryzae, Cercospora beticola, Puccinia striiformis, Erysiphe cichoracearum, Fusarium oxysporum (melonis par exemple), Pyrenophora avenae, Septoria tritici, Venturia inaequalis, Whetzelinia sclerotiorum, Monilia laxa, Mycosphaerella fijiensis, Marssonina panettoniana, Alternaria solani, Aspergillus niger, Cercospora arachidicola, Cladosporium herbarum, Helminthosporium oryzae, Penicillium expansum, Pestalozzia sp, Phialophora cinerescens, Phoma betae, Phoma foveata, Phoma lingam, Ustilago maydis, Verticillium dahliae, Ascochyta pisi, Guignardia bidwellii, Corticium rolfsii, Phomopsis viticola, Sclerotinia sclerotiorum, Sclerotinia minor, Coryneum cardinale, Rhizoctonia solani.

Elles sont aussi et encore actives contre les champignons suivants : Acrostalagmus koningi, les Alternaria, les Colletotrichum, Diplodia natalensis, Gaeumannomyces graminis, Gibberella fujikuroi, Hormodendron cladosporioides, Lentinus degener ou tigrinus, Lenzites quercina, Memnoniella echinata, Myrothecium verrucaria, Paecylomyces varioti, Pellicularia sasakii, Phellinus megaloporus, Polystictus sanguineus, Poria vaporaria, Sclerotium rolfsii, Stachybotris atra, les Stereum, Stilbum sp. Trametes trabea, Trichoderma pseudokoningi, Trichothecium roseum.

Les compositions utilisables dans l'invention sont spécialement intéressantes par leur spectre large au niveau des maladies des céréales (oïdium, rouille, piétin-verse, rhinchosporiose, helminthosporioses, septorioses et fusarioses). Elles présentent également un grand intérêt en raison de leur activité sur la pourriture grise (Botrytis) et les cercosporioses, et, de ce fait, elles peuvent être appliquées sur des produits de multiplication de cultures aussi variées que la vigne, les cultures maraîchères et l'arboriculture et les cultures tropicales telles que l'arachide, le bananier, le caféier, la noix de pécan et d'autres.

Outre les applications déjà décrites plus haut, les compositions utilisables dans l'invention présentent en outre une excellente activité biocide à l'égard de nombreuses autres variétés de microorganismes parmi lesquelles on peut citer à titre non limitatif, des champignons comme ceux des genres :
- Pullularia comme l'espèce P. pullulans,
- Chaetomium comme l'espèce C. globosum,
- Aspergillus comme l'espèce Aspergillus niger,
- Coniophora comme l'espèce C. puteana.

En raison de leur activité biocide, les compositions utilisables dans l'invention permettent de combattre efficacement les microorganismes dont la prolifération crée de nombreux problèmes dans les domaines agricole et industriel. A cet effet, ils conviennent tout spécialement bien à la protection des végétaux ou de produits industriels tels que le bois, le cuir, les peintures, le papier, les cordages, les plastiques, les circuits d'eau industriels.

Elles sont tout particulièrement bien adaptées à la protection des produits lignocellulosiques et notamment du bois, qu'il s'agisse de bois d'ameublement, de charpente ou de bois exposé aux intempéries tels que les bois de clôture, les piquets de vignes, les traverses de chemin de fer.

Les compositions utilisables dans l'invention sont généralement mises en oeuvre avec des solvants organiques et peuvent être éventuellement associées à un ou plusieurs produits biocides connus tels que le pentachlorophénol, les sels métalliques, notamment de cuivre, de manganèse, de cobalt, de chrome, de zinc dérivés d'acides minéraux ou carboxyliques (acides heptanoïque, octanoïque, naphténique) ; les complexes organiques de l'étain, le mercaptobenzothiazole, les insecticides tels que les pyrethroïdes ou les organochlorés.

Les compositions peuvent le plus souvent contenir un fongicide b) (association binaire) ou deux (association ternaire) ou même quatre (association quaternaire).

Les fongicides convenant dans le cadre de la présente invention sont avantageusement choisis parmi les sous-classes suivantes :
1. les dérivés chlorés ou nitrés du benzène comme le quintozène ou le chlorothalonil,
2. les dérivés dicarboximides comme le captane, le folpel, le captafol, l'iprodione, la procymidone, la vinchlozoline.
3. les dérivés comprenant un ou plusieurs hétérocycles comme les quinoléines (éthoxyquine), les morpholines (dodémorphe, tridémorphe, fenpropimorphe, le 4-[3-(4-chlorophen phényl)-2-méthyl propyl]-2,6-diméthyl morpholine décrit dans EP-A-262870), les pyrroles tels que le fenpiclonil ou 4-(2,3-dichlorophényl), pyrrole-3 carbonitrile, les pipéridines (fenpropidine),
4. les dérivés de l'acide phosphoreux comme les phosphites métalliques tels que le phosétyl-Al et l'acide phosphoreux lui-même et ses sels de calcium ou de potassium,
5. les dérivés de l'acide dithiocarbamique comme le manèbe, le mancozèbe ou le zinèbe,
6. les dérivés du phénol comme le dinocap ou le binapacryl,
7. les dérivés des quinones comme le dithianon, le chloranil, le triazoxide,
8. les dérivés de l'acide carbamique et des benzimidazoles comme le carbendazime, le bénomyl, le thiophanate-méthyl ou les dithiocarbamates comme le thirame,
9. les dérivés soufrés comme le dazomet ou l'étridiazole ou le soufre,
10. les amines et les amides telles que le dichloran, la carboxine, la triforine, le cymoxanil, le métalaxyl, l'ofurace, l'oxadixyl, l'ampropylfos,
11. les diazines telles que le chinométhionate, le fénarimol, l'anilazine, le nuarimol, le bupirimate, l'éthyrimol, le pyrazophos,
12. les sulfamides telles que le dichlofluanide, le tolyfluanide,
13. les guanidines telles que la doguadine, triacétate de guazatine, docécylbenzène sulfonate d'iminoctadine,
14. les triazoles tels que par exemple ceux décrits dans le brevet britannique n° 2046260 dont le contenu est incorporé par référence comme le diniconazole ou d'autres triazoles connus, le propiconazole, le triadimefon, le triadimenole, le diclobutrazole, le bitertanol, le penconazole, le flutriafol, le tebuconazole, le fluzilazole,
15. les imidazoles comme le prochloraz ou l'imazalil,
16. le cuivre ou les dérivés organiques ou inorganiques du cuivre, comme l'oxyquinoleate de cuivre.

Les noms communs de ces composés sont agréés par la British Standard Institution et correspondent aux matières actives décrites dans le pesticide manual 8th edition 1987.

De préférence, le rapport pondéral du composé a) avec les fongicides b) décrits ci-dessus est compris entre 0,0003 et 3000 et avantageusement entre 0,001 et 1000.

Sont préférés les composés suivants :
- manèbe,
- fenpropimorphe,
- thirame,
- iprodione,
- phosethyl Al,
- éthyrimol.

L'invention concerne un procédé de traitement des cultures atteintes ou susceptibles d'être atteintes par les maladies fongiques, caractérisé en ce que l'on applique sur les feuilles des végétaux une dose efficace et non phytotoxique d'une composition utilisable dans l'invention.

Ces compositions s'appliquent avantageusement à des doses de 0,002 à 1 kg/ha et plus spécifiquement de 10 à 600 g/ha.

Parmi les cultures, on peut citer les céréales (blé, orge par exemple), la vigne, les cultures maraichères, le riz, le maïs, l'arboriculture, les cultures tropicales, la betterave, le colza.

Le procédé peut être mis en oeuvre par utilisation d'une composition prête à l'emploi, ou par mélange extemporané juste avant l'emploi des différentes matières actives (tank mix). La composition peut également être formée in situ par applications successives sur la feuille des diverses matières actives.

### Exemples :

### Exemple 1 :

### Test in vivo sur "Puccinia recondita" responsable de la rouille brune du blé :

On prépare par broyage fin une émulsion aqueuse de la matière active (mélange de fongicide a et de manèbe) ayant la composition suivante :
- matière active à tester : 90 mg,
- Tween 80 (agent tensio actif constitué d'un oléate de dérivé polyoxyéthyléné du sorbitan) dilué à 10 % dans l'eau : 0,45 ml,
- eau : 90 ml.

Cette émulsion aqueuse est ensuite diluée par de l'eau pour obtenir la concentration désirée.

Du blé, en godets, semé dans de la terre franche, est traité au stade 10 cm de hauteur par pulvérisation avec des émulsions aqueuses (appelées bouillies) de même composition que celle décrite ci-avant et à diverses concentrations du composé à tester. L'essai est répété deux fois avec chaque concentration.

Au bout de 24 heures, une suspension aqueuse de spores (50000 sp/cm³) est pulvérisée sur le blé ; cette suspension a été obtenue à partir de plants contaminés. On place ensuite le blé pendant 48 heures en cellule d'incubation à environ 18°C et à 100°C d'humidité relative.

Au bout de ces deux jours, l'humidité relative est ramenée à 60 %. Le contrôle de l'état des plants se fait entre le 11ème et le 15ème jour après la contamination par comparaison avec le témoin non traité.

Dans ces conditions, on observe les résultats suivants :

| Pour cent d'efficacité mg/l | | | | | | |
|---|---|---|---|---|---|---|
| MANEBE | 0 | 4 | 12 | 37 | 111 | 333 |
| Fongicide a) | | | | | | |
| 0 | 0 | 27,5 | 32,5 | 72,5 | 95 | 97,25 |
| 4 | 0 | 18,75 | 40 | 52,5 | 76,25 | 95,25 |
| 12 | 36,25 | 36,25 | 42,5 | 62,5 | 81,25 | 98 |
| 37 | 57,5 | 65 | 75 | 85 | 92,5 | 98,5 |
| 111 | 80 | 80 | 81,25 | 85 | 90 | 98,5 |
| 333 | 95,7 | 98 | 97,75 | 98,25 | 98,75 | 100 |

### Exemple 2 :

### Test in vivo sur "Erysiphe graminis" f.sp. hordei sur orge responsable de l'oïdium :

On prépare selon la méthode précédente une association fongicide a) et fenpropimorphe.

De l'orge, en godets, semée dans de la terre franche, est traitée au stade 10 cm de hauteur par pulvérisation d'une émulsion aqueuse (appelée bouillie) de concentration indiquée ci-après. L'essai est répété deux fois. Au bout de 24 heures, on saupoudre les plants d'orge avec des spores d'Erysiphe graminis, le saupoudrage étant effectué à l'aide de plants malades.

La lecture se fait 8 à 12 jours après la contamination.

Dans ces conditions, on observe les résultats suivants :

| Pour cent d'efficacité mg/l | | | | | | |
|---|---|---|---|---|---|---|
| FENPROPIMORPHE | 0 | 4 | 12 | 37 | 111 | 333 |
| Fongicide a) | | | | | | |
| 0 | 0 | 26,25 | 38,75 | 56,25 | 67,5 | 83,75 |
| 4 | 38,75 | 52,5 | 52,5 | 53,75 | 55 | 67,5 |
| 12 | 61,25 | 52,5 | 52,5 | 52,5 | 75 | 80 |
| 37 | 62,5 | 63,75 | 67,5 | 65 | 71,25 | 90 |
| 111 | 68,75 | 55 | 67,5 | 75 | 86,25 | 92,5 |
| 333 | 75 | 90,75 | 99,5 | 93,75 | 98,5 | 96 |

On donne ci-dessous la structure chimique du fongicide a ou 2-(4-chlorobenzylidène)-5,5-diméthyl-1-(1H-1,2,4-triazol-1-ylméthyl) 1-cyclopentanol obtenu selon le procédé indiqué en début de description. 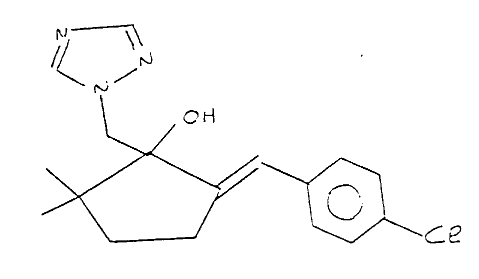
Ce composé a généralement une structure E à plus de 95 %.

## Revendications

1. Procédé pour contrôler les maladies fongiques des végétaux cultivés par application sur les feuilles desdits végétaux de :
a) le 2-(4-chlorobenzylidène)-5,5-diméthyl-1-(1H-1,2,4-triazol-1-ylméthyl) 1-cyclopentanol ;
b) un ou plusieurs fongicides convenant pour la protection contre lesdites maladies fongiques.

2. Procédé selon la revendication 1) dans lequel les plantes sont traitées avec une composition fongicide comprenant (a), (b), un support inerte convenable en agriculture et éventuellement un tensio actif convenable en agriculture.

3. Procédé selon la revendication 1 ou 2, caractérisé en ce que les maladies fongiques sont les maladies des céréales, de la vigne, des cultures maraichères, de l'arboriculture, des cultures tropicales, du riz, du maïs, la betterave, le colza.

4. Procédé selon la revendication 1 ou 2, caractérisé en ce que les fongicides b) sont choisis parmi les groupes suivants :
1. les dérivés chlorés ou nitrés du benzène comme le quintozène ou le chlorothalonil,
2. les dérivés dicarboximides comme le captane, le folpel, le captafol, l'iprodione, la procymidone, la vinchlozoline,
3. les dérivés comprenant un ou plusieurs hétérocycles comme les quinoléines (éthoxyquine), les morpholines (dodémorphe, tridémorphe, fenpropimorphe), le 4-[3-(4-chlorophen phényl)-2-méthyl propyl]-2,6-diméthylmorpholine, les pyrroles tels que le fenpiclonil ou 4-(2,3-dichlorophényl) pyrrole-3 carbonitrile, les pipéridines (fenpropidine),
4. les dérivés de l'acide phosphoreux comme les phosphites métalliques tels que le phosétyl-Al et l'acide phosphoreux lui-même, et ses sels de calcium ou de potassium,
5. les dérivés de l'acide dithiocarbamique comme le manèbe, le mancozèbe ou le zinèbe, ou les dithiocarbamates comme le thirame,
6. les dérivés du phénol comme le dinocap ou le binapacryl,
7. les dérivés des quinones comme le dithianon, le chloranil, le triazoxide,
8. les dérivés de l'acide carbamique et des benzimidazoles comme le carbendazime, le bénomyl, le thiophanate-méthyl ou les dithiocarbamates comme le thirame,
9. les dérivés soufrés comme le dazomet ou l'étridiazole ou le soufre,
10. les amines et les amides telles que le dichloran, la carboxine, la triforine, le cymoxanil, le métalaxyl, l'ofurace, l'oxadixyl, l'ampropylfos,
11. les diazines telles que le chinométhionate, le fénarimol, l'anilazine, le nuarimol, le bupirimate, l'éthyrimol, le pyrazophos,
12. les sulfamides telles que le dichlofluanide, le tolyfluanide,
13. les guanidines telles que la doguadine, triacétate de guazatine, dodécylbenzène sulfonate d'iminoctadine,
14. les triazoles comme le diniconazole ou d'autres triazoles connus, le propiconazole, le triadimefon, le triadimenole, le diclobutrazole, le bitertanol, le penconazole, le flutriafol, le tebuconazole, le fluzilazole,
15. les imidazoles comme le prochloraz ou l'imazalil,
16. le cuivre ou les dérivés organiques ou inorganiques du cuivre comme l'oxyquinoleate de cuivre.

5. Procédé selon la revendication 1 ou 2, caractérisé en ce que le rapport en poids du fongicide a) au fongicide b) est compris entre 0,0003 et 3000.

6. Procédé selon la revendication 5, caractérisé en ce que le rapport en poids est compris entre 0,001 et 1000.

7. Procédé selon l'une des revendications précédentes, caractérisé en ce que la quantité de fongicide (a) et de fongicide (b) est appliquée à raison de 0,002 à 1 kg/ha.

8. Procédé selon la revendication 7, caractérisé en ce que la quantité est de 0,1 à 600 g/ha.

## Claims

1. Process for the control of fungal diseases of cultivated plants by applying to the leaves of the said plants:
a) 4-(4-chlorobenzylidene)-5,5-dimethyl-1-(1H-1,2,4-triazol-1-ylmethyl)-1-cyclopentanol;
b) one or more fungicides suitable for protecting against the said fungal diseases.

2. Process according to claim 1 in which the plants are treated with a fungicidal composition comprising a), b), an agriculturally suitable inert carrier and optionally an agriculturally suitable surface-active agent.

3. Process according to claim 1 or 2, characterized in that the fungal diseases are diseases of cereals, vines, market garden crops, arboricultural crops, tropical crops, rice, maize, beet and rape.

4. Process according to claim 1 or 2, characterized in that the b) fungicides are chosen from among the following groups:
1. chlorinated or nitrated benzene derivatives such as quintozene or chlorothalonil,
2. dicarboximide derivatives such as captan, folpel, captafol, iprodione, procymidone and vinchlozolin.
3. derivatives comprising one or more heterocyclic compounds such as quinolines (ethoxyquin), morpholines (dodemorph, tridemorph, fenpropimorph, 4-[3-(4-chlorophenyl)-2-methylpropyl]-2,6-dimethylmorpholine, pyrroles such as fenpiclonil or 4-(2,3-dichlorophenyl)pyrrole-3-carbonitrile and piperidines (fenpropidin),
4. phosphorous acid derivatives such as metal phosphites such as phosetyl-Al and phosphorous acid itself and its calcium or potassium salts,
5. dithiocarbamic acid derivatives such as maneb, mancozeb or zineb, or dithiocarbamates such as thiram,
6. phenol derivatives such as dinocap or binapacryl,
7. quinone derivatives such as dithianon, chloranil, triazoxide,
8. carbamic acid and benzimidazole derivatives such as carbendazim, benomyl, thiophanate-methyl or dithiocarbamates such as thiram,
9. sulphur-containing derivatives such as dazomet or etridiazole or sulphur,
10. amines and amides such as dichloran, carboxin, triforin, cymoxanil, metalaxyl, ofurace, oxadixyl, ampropylfos,
11. diazines such as chinomethionat, fenarimol, anilazine, nuarimol, bupirimate, ethyrimol, pyrazophos,
12. sulphamides such as dichlofluanid, tolylfluanid,
13. guanidines such as doguadine, guazatine triacetate, iminoctadine dodecylbenzenesulphonate,
14. triazoles such as diniconazole or other known triazoles, propiconazole, triadimefon, triadimenol, dichlobutrazole, bitertanol, penconazole, flutriafol, tebuconazole, flusilazole,
15. imidazoles such as prochloraz or imazalil,
16. copper or organic or inorganic copper derivatives such as oxine-copper.

5. Process according to claim 1 or 2, characterized in that the weight ratio of the a) fungicide to the b) fungicide is between 0.0003 and 3,000.

6. Process according to claim 5, characterized in that the weight ratio is between 0.001 and 1,000.

7. Process according to one of the preceding claims, characterized in that the quantity of fungicide a) and of fungicide b) is applied in amounts of 0.002 to 1 kg/ha.

8. Process according to claim 7, characterized in that the quantity is 0.1 to 600 g/ha.

## Patentansprüche

1. Verfahren zur Kontrolle von Pilzerkrankungen von Kulturpflanzen durch Anwendung von
(a) 2-(4-Chlorbenzyliden)-5,5-dimethyl-1-(1H-1,2,4-triazol-1-ylmethyl)-1-cyclopentanol und
(b) einem oder mehreren Fungiciden, die sich zum Schutz gegen diese Pilzerkrankungen eignen,
auf die Blätter dieser Pflanzen.

2. Verfahren nach Anspruch 1, wobei die Pflanzen mit einer fugiciden Zusammensetzung behandelt werden, die (a), (b) und einen inerten, landwirtschaftlich geeigneten Träger sowie ggfs. ein landwirtschaftlich geeignetes Tensid enthält.

3. Verfahren nach Anspruch 1 oder 2, dadurch gekennzeichnet, daß es sich bei den Pilzerkrankungen um Erkrankungen von Cerealien, Weinreben, Gemüsekulturen, Baumkulturen, tropischen Kulturen, Reis, Mais, Zuckerrüben oder Raps handelt.

4. Verfahren nach Anspruch 1 oder 2, dadurch gekennzeichnet, daß die Fungicide (b) unter folgenden Gruppen ausgewählt werden:
1) Chlorierten oder nitrierten Derivaten des Benzols, wie Quintozen oder Chlorthalonil;
2) Dicarboximid-Derivaten, wie Captan, Folpet, Captafol, Iprodion, Procymidon und Vinchlozolin;
3) Derivaten, die einen oder mehrere Heterocyclen enthalten, wie Chinolinen (Ethoxyquin), Morpholinen (Dodemorph, Tridemorph, Fenpropimorph, 4-[3-(4-Chlorphenyl)-2-methylpropyl]-2,6-dimethylmorpholin, Pyrrolen, wie Fenpiclonil oder 4-(2,3-Dichlorphenyl)-3-pyrrolcarbonitril, oder Piperidinen (Fenpropidin);
4) Derivaten der phosphorigen Säure, wie Metallphosphiten, z.B. Aluminiumphosetyl und phosphoriger Säure selbst und ihrem Calcium- oder Kaliumsalz;
5) Derivaten der Dithiocarbaminsäure, wie Maneb, Mancozeb oder Zineb, oder Dithiocarbamaten, wie Thiram;
6) Phenolderivaten, wie Dinocap oder Binapacryl;
7) Chinonderivaten, wie Dithianon, Chloranil oder Triazoxid;
8) Derivaten von Carbaminsäure und Benzimidazolen, wie Carbendazim, Benomyl, Thiophanatmethyl, oder Dithiocarbamaten, wie Thiram;
9) schwefelhaltigen Derivaten, wie Dazomet oder Etridiazol, oder Schwefel,
10) Aminen und Amiden, wie Dichloran, Carboxin, Triforin, Cymoxanil, Metalaxyl, Ofurace, Oxadixyl oder Ampropylfos;
11) Diazinen, wie Chinomethionat, Fenarimol, Anilazin, Nuarimol, Bupirimate, Ethyrimol oder Pyrazophos;
12) Sulfamiden, wie Dichlofluanid oder Tolyfluanid;
13) Guanidinen, wie Doguadine, Guazatine-triacetat oder Iminoctadine-dodecylbenzolsulfonat;
14) Triazolen, wie Diniconazol, oder andere bekannte Triazole, Propiconazol, Triadimefon, Triadimenol, Diclobutrazol, Bitertanol, Penconazol, Flutriafol, Tebuconazol oder Fluzilazol;
15) Imidazolen, wie Prochloraz oder Imazalil;
16) Kupfer oder organischen oder anorganischen Kupferderivaten, wie Kupfer-8-Chinolinol-Komplex.

5. Verfahren nach Anspruch 1 oder 2, dadurch gekennzeichnet, daß das Gewichtsverhältnis von Fungicid (a) zu Fungicid (b) im Bereich von 0,0003 bis 3000 liegt.

6. Verfahren nach Anspruch 5, dadurch gekennzeichnet, daß das Gewichtsverhältnis im Bereich von 0,001 bis 1000 liegt.

7. Verfahren nach einem der vorhergehenden Ansprüche, dadurch gekennzeichnet, daß die Zusammensetzung aus Fungicid (a) und Fungicid (b) in einer Ausbringmenge von 0,002 bis 1 kg/ha angewandt wird.

8. Verfahren nach Anspruch 7, dadurch gekennzeichnet, daß die Ausbringmenge 0,1 bis 600 g/ha beträgt.
